# EUROPEAN PATENT APPLICATION

(11) **EP 3 144 862 A1**
(43) Date of publication of application: **22.03.2017**
(21) Application number: 16184436.0
(22) Date of filing: 17.08.2016
(51) Int. Cl.: G06Q 10/06, G06Q 30/02

(54) **ACTIVITY CONTROL SYSTEM AND ACTIVITY CONTROL METHOD**

(30) Priority: 18.09.2015 JP 2015184869
(71) Applicant: OMRON CORPORATION, Kyoto-shi, Kyoto 600-8530 (JP)
(72) Inventor: Shibagaki, Saeko, Kyoto-shi, Kyoto 600-8530 (JP); Uenoyama, Toru, Kyoto-shi, Kyoto 600-8530 (JP)
(74) Representative: Kilian Kilian & Partner

(57) **Abstract**

Provided is a technique for optimizing the overall situation of the activities of a large number of users. An activity control system includes: a content provision unit for transmitting, to the terminal apparatuses of a portion of users, a content for prompting activity change; a checking unit for checking whether or not the users that received the provided content have actually changed their activities in accordance with the content; and a content effect determination unit for determining the characteristics and/or states of users that are likely to accept the content based on the checking result by the checking unit and the characteristics and/or states of users stored in a database, and recording the determination result in the database, wherein the content provision unit determines, based on the determination result recorded in the database, users that are to be selected as a target for providing the content next time the content is provided.

## Description

### FIELD

The present invention relates to a technique for controlling the activities of individual users in order to optimize the overall situation of the activities of a large number of users.

### BACKGROUND

If the activities of a large number of users (e.g., requesting activities, consuming activities, moving activities, producing activities and using activities) excessively concentrate in a portion of time and space, there are cases where a shortage of resources (e.g., time, space, substances, and energy) required for those activities arises, a conflict between users occurs, and user activities become inaccurate. Moreover, if the activities of a large number of users (e.g., requesting activities, consuming activities, moving activities, producing activities, and using activities) excessively concentrate on the same target (e.g., a road, a building, a communication channel, a computer, water resources and energy resources), there are cases where a shortage of resources required for those activities arises, conflicts between users occur, user activities become inaccurate and problems such as accidents, breakdowns, troubles and the like are caused. Traffic congestion, crowded stores and the like, an excessive demand for electrical power, server downtimes due to access concentration and the like are troubles that occur due to demand concentration, and can be said to be one pattern of the troubles in an overall situation that are caused by the activities of a large number of users.

As a technique for easing traffic congestion, for example, JP 2014-225098A suggests a method for easing congestion by distributing, to moving vehicles, coupons that can be used in service areas and the like, in order to guide the vehicles to a facility away from a road. However, it is not possible to expect a method for indiscriminately distributing coupons to have a very high efficiency. Moreover, it is not possible to predict what percentage of the vehicles that received the coupon go to the facility, and it is difficult to perform a control such that both eases congestion on the road and prevents crowdedness of the facility. A technique for easing communication congestion by devising how to assign communication channels to users that desire communication includes the technique described in JP 2015-104114A, for example.

JP 2014-225098A and JP 2015-104114A are examples of background art.

### SUMMARY

The present invention has been made in light of the above situations, and the purpose of the invention is to provide a technique for optimizing the overall situation of the activities of a large number of users.

The invention according to claim 1 provides an activity control system for changing, in order to bring the overall situation of the activities of a large number of users closer to an overall optimum state that is based on a predetermined criterion, activities of a selected portion of or all of the large number of users, the activity control system including: a database for updating and storing information indicating characteristics and/or a state of each user; activity determination means for determining an activity to be taken by the selected users in order to bring the overall situation closer to the overall optimum state based on the information stored in the database; content provision means for transmitting, to the terminal apparatuses of a portion of users selected from users whose information is stored in the database, content for prompting change to the activity determined by the activity determination means; checking means for checking whether or not the users that received the provided content have actually changed activities in accordance with the content; and content effect determination means for determining characteristics and/or a state of users that are likely to accept the content, based on a checking result by the checking means and the characteristics and/or state of the users stored in the database, and recording a determination result in the database, wherein the content provision means determines users that are to be selected as a target to which the content is to be provided, based on the determination result recorded in the database, when the content is provided next time.

According to the invention according to claim 1, every time a content is provided, a determination result of what characteristics a user that readily accepts the content has and/or what state such a user is in are accumulated in a database (learned), and based on the learned determination result, users to which the content is to be provided are selected. The users selected in this manner have a higher possibility of accepting the provided content and actually changing their activity compared to other users. Therefore, a content to be provided to the users becomes more likely to cause activity change by the users, and thus the overall situation of the activities of a large number of users can be efficiently optimized.

The invention according to claim 2 provides the activity control system according to claim 1, wherein the overall situation is a vehicle distribution situation in a road network, and the overall optimum state is a non-congestion state. According to the invention according to claim 2, traffic congestion can be eased or prevented.

The invention according to claim 3 provides the activity control system according to claim 1 or 2, wherein the content effect determination means calculates, for each user, an activity change rate that is a ratio of the number of times an activity has been actually changed in accordance with the content to the number of times the content has been provided, and records, in the database, the activity change rate for each user as the determination result. According to the invention according to claim 3, the correlation between user characteristics and/or state and the probability of activity change can be accumulated as data. Such data is useful for selecting users to which a content is to be provided, determining the number of users to which a content is to be provided, predicting the possibility of acceptance and the like.

The invention according to claim 4 provides the activity control system according to claim 3, wherein when providing the content, the content provision means selects users whose activity change rate for the content is high, as a target for providing the content. According to the invention according to claim 4, it is possible to easily extract users that have a high possibility of accepting the provided content and actually changing their activity.

The invention according to claim 5 provides the activity control system according to claim 1 or 2, wherein the content effect determination means divides the plurality of users into a plurality of clusters based on their characteristics and/or a state, calculates, for each of the clusters, an activity change rate that is a rate of the number of users that actually have changed their activity in accordance with the content to the total number of users to which the content has been provided, and records, in the database, the activity change rate for each cluster as a result of the effect determination. According to the invention according to claim 5, the correlation between user characteristics and/or state and the probability of activity change can be accumulated as data. Such data is useful for selecting users to which a content is to be provided, determining the number of users to which a content is to be provided, predicting the possibility of acceptance and the like.

The invention according to claim 6 provides the activity control system according to claim 5, wherein when providing the content, the content provision means selects users that belong to a cluster with a high activity change rate for the content, as a target for providing the content. According to the invention according to claim 6, it is possible to easily extract users that have a high possibility of accepting the provided content and actually changing their activity.

The invention according to claim 7 provides the activity control system according to claim 6, wherein if there is an upper limit to the number of users that can accept the content, the content provision means calculates the number of people predicted to accept the content in a case where the content is provided, by multiplying the number of users that belong to a cluster selected as a target for providing the content by an activity change rate of the cluster, and if the number of people predicted to accept the content exceeds the upper limit, reduces the number of users to which the content is to be provided. According to the invention according to claim 7, a content is provided only to the necessary and sufficient number of users, and thus it is possible to reduce a processing load related to content provision, and it is also possible to avoid a situation in which a large number of users desire to accept a content regardless of a low upper limit for acceptance and a system load increases.

The invention according to claim 8 provides the activity control system according to any one of claims 1 to 7, wherein the content provision means is capable of providing a plurality of contents (content items) having different content details, and the content effect determination means performs, for each of the plurality of contents, effect determination of what characteristics users that readily accept each content have and/or what state such users are in, and records, in the database, a result of the effect determination for each of the plurality of contents. According to the invention according to claim 8, it is possible to distribute contents to users appropriate for each of the contents.

The invention according to claim 9 provides the activity control system according to claim 8, wherein the plurality of contents include a content for giving away an incentive to users that have changed their activities, and a content for not giving away an incentive to users that have changed their activities, and the content provision means more preferentially provides the content for not giving away an incentive to users that have changed their activities than the content for giving away an incentive to users that have changed their activities. By prioritizing content for not giving away an incentive, it is possible to reduce the burden of the operating cost related to giving away incentives.

Note that the present invention can be considered as an activity control system that has at least a portion of the above configurations or functions. Moreover, the present invention can also be considered as an activity control method that includes at least a portion of the above processing, a program for causing a computer to execute such method, or a computer-readable recording medium in which such program is non-temporarily recorded. Unless technical inconsistency occurs, each of the above configurations and processing can be combined with each other so as to constitute the present invention.

According to the present invention, a content to be provided to users becomes more likely to cause activity change in accordance with user characteristics, and thus it is possible to efficiently optimize the overall situation of the activities of a large number of users.

### BRIEF DESCRIPTION OF THE DRAWINGS

Fig. 1 is a diagram showing an overview of an activity control system according to a first embodiment.
Fig. 2 is a block diagram showing an overall configuration of the activity control system according to the first embodiment.
Fig. 3 is a diagram showing an example of a data structure of a user characteristics management DB.
Fig. 4 is a diagram showing an example of a data structure of a user state management DB.
Fig. 5 is a diagram showing an example of a data structure of a user activity pattern management DB.
Fig. 6 is a diagram showing an example of a data structure of a content effect management DB.
Fig. 7 is a diagram showing an example of a data structure of the content effect management DB.
Fig. 8 is a diagram schematically showing information recorded in a local transportation route DB.
Fig. 9 is a flowchart of main processing of a terminal apparatus.
Fig. 10 is a flowchart of main processing of an activity control system.
Fig. 11 is an example of a content displayed on a screen of a terminal apparatus.
Fig. 12 is a detailed flowchart of levelling model generation processing.
Fig. 13 is a detailed flowchart of content provision processing.
Fig. 14 is a detailed flowchart of step S405 in Fig. 13.
Fig. 15 is a flow diagram showing a flow of content provision.
Fig. 16 is a diagram showing an overview of an activity control system according to a second embodiment.

### DETAILED DESCRIPTION

The present invention relates to an activity control system and an activity control method for changing the activities of a selected portion of or all of a large number of users in order to bring the overall situation (entire situation) of the activities of the large number of users closer to an overall optimum state that is based on a predetermined criterion. The present invention can be applied to dissolve troubles of an overall situation caused by the activities of a large number of users such as traffic congestion, crowdedness in a store and the like, an excessive demand for electrical power and access concentration on a server.

### First Embodiment

A first embodiment is an example in which an activity control system according to the present invention is applied to control of a traffic flow (traffic demand control).

When congestion has occurred or congestion occurrence is predicted, the activity control system according to the first embodiment provides a content for prompting activity change to drivers in an area so as to cause the drivers to change their activities (e.g., change a travelling start time, change a means of transportation, and change a travelling route), and thereby disconcentrates (i.e. disperses) the traffic flow in the area. Accordingly, the purpose of the activity control system of the first embodiment is to bring the vehicle distribution situation in the road network in an area (overall situation) closer to a non-congestion state (overall optimum state). This makes it possible to ease congestion and prevent congestion in the roads in the area, and to attain accompanying effects such as CO₂ emission reduction and accident reduction.

### System Overview

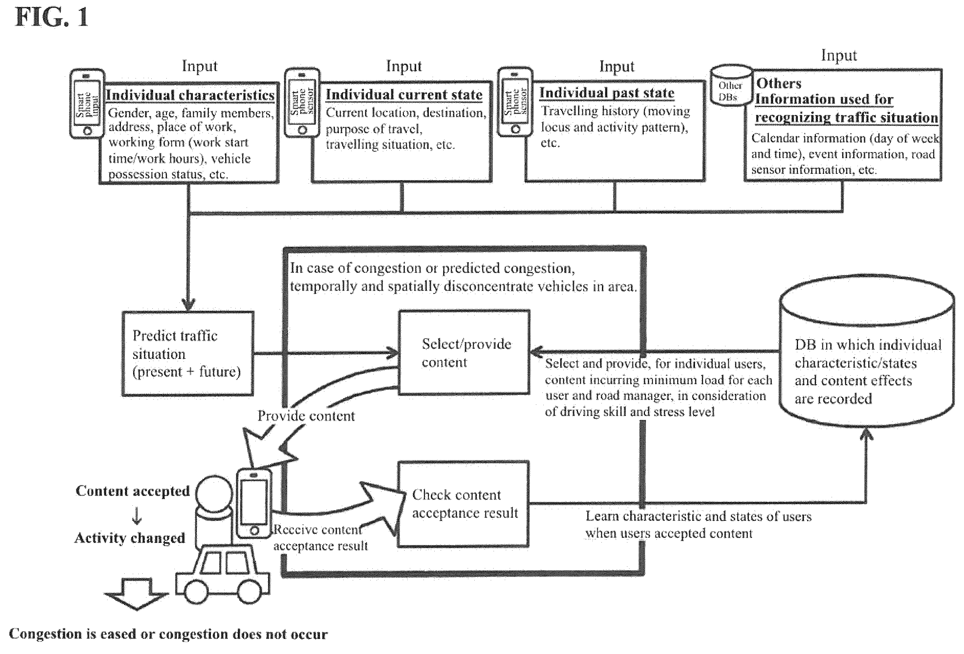

Fig. 1 shows the overview of the activity control system according to the first embodiment (hereinafter, simply referred to as a "system"). The activity control system is constituted by a server apparatus on the Internet, and can communicate with the terminal apparatus of each user and other apparatuses (servers, databases, sensors and the like that provide traffic information and the like) via the Internet.

Each user performs user registration in advance using their terminal apparatus, and sets their individual characteristics (e.g., gender, age, family members, address, place of work, working form (work start time/work hours), vehicle possession status and driving level (driving history)) in the system. Also, periodically, or when starting to drive, or the like, each user sends, to the system, data regarding their individual current states (e.g., current location, travelling situation, destination, travelling situation (e.g., riding a car) and scheduled travelling route) and individual past states (e.g., travelling history (moving locus and activity pattern)).

The system estimates the traffic situations in the area at the present time point and in the near future based on the data of each user's characteristics and state and traffic situation-related information (e.g., calendar information, nearby event information, information in sensors installed on roads, weather information and congestion prediction information) that can be obtained from other apparatuses. If congestion is occurring, or congestion occurrence could be predicted, the system provides a content for recommending activity changes to users in order to temporally and spatially disconcentrate the vehicles in the area. If users that have seen the content received by their terminal apparatuses accept the recommendation according to that content and change their activities (e.g., select a detour, change their destination or departure time, use another transportation system or walk), congestion easing and prevention can be realized.

Meanwhile, the system checks whether or not each of the users has accepted the content, or actually changed their activity. The system then learns, what content was accepted and what characteristics each user had and in what state the user was when the user accepted the content, and accumulates such information in a database. This information is used for selecting users that will serve as a target for providing a content, selecting content details and the like, when the content is provided thereafter.

For example, this system may provide content for recommending a detour to the drivers of vehicles that are currently or will be in the future on a congested road. However, if all the vehicles are guided to the detour, there is a possibility that the detour will be congested. Therefore, if the congestion cannot be dissolved only by disconcentration to a detour, shifting a time of travel and using another transportation system are encouraged in order to dissolve the congestion in an entire area. In other words, traffic congestion is eased and prevented by temporally and spatially disconcentrating the vehicles in an area. At this time, the characteristics of the area are preferably taken into consideration. For example, in an area with public transportation systems such as railways and buses, spatial disconcentration such as disconcentration by guiding drivers to a detour and guiding to a public transportation system is preferably prioritized. In contrast, in the case of an area with a small number of roads and no public transportation system, temporal disconcentration of vehicles is preferably prioritized.

There is a high possibility that an effective result is not attained, even if the same content is indiscriminately provided to all the people in an area. Moreover, there is also a possibility that if all the people change to a detour in accordance with the guide of a content, vehicles concentrate on a usually sparse road, and traffic congestion occurs on that road. Therefore, it is preferable to predict, using data mining, if what content is provided to what type of people, what percentage of the people change their activities, and then provide a content with appropriate content details to a number of the appropriate people. Individual characteristics, a driving level, an individual state, an individual activity changeability stage, a level of stress caused by changing an activity and the like are preferably taken into consideration when selecting the targets to which content is to be provided as well as the content details to be provided. This makes it possible to perform the control such that, no content, or only limited contents that are unlikely to give stress are provided to people that feel stressed by the content being provided or by changing their activities. In addition, at the time of providing content, the user's driving level as well is preferably taken into consideration (e.g., information on a detour is provided only to people used to driving, but not to people with little driving experience). After all, if a user whose driving level is low is guided to a narrow path or a new road, there is a risk that an unexpected situation such as an accident is induced.

In order to increase the acceptance rate for a content to be provided to people, information for improving the knowledge levels of people (e.g., informing them of a detour, an uncrowded time of day and the like) is provided. Moreover, the delivery of content is optimized, for example, users whose content acceptance rate is high are complemented or thanked, such that congestion easing and congestion prevention in the whole area can be achieved. Also, preferably, whether or not a person that received content changed their activity, whether or not this activity change is due to an effect of providing the content, and whether or not the traffic situation in the area has been improved is evaluated and learned, and is reflected afterward on selection of a target for providing contents and content details. If information for improving a knowledge level is provided, then, for example, a person who did not know about the existence of a detour until then may recognize that there is the detour, and may take the detour on their own without any content being distributed. Accordingly, it can be expected that this area will gradually become hardly congested at all, even if the system is not in operation. Moreover, the frequency at which the system is operated and the number of people to which content is provided can be decreased, and the number of incentives that are given away also can be decreased. Accordingly, it can be expected that the operating cost will gradually decrease.

An incentive may be given to a person who changed their activity. Incentives may include information, goods, money, rights and the like that users would be pleased with. Examples of "information" can include detailed road traffic information, information regarding secret sales and the like, examples of "goods" can include comfort items for travel by train and the like, examples of "money" can include cash, discount tickets, free tickets, coupon tickets, parking meter extension tickets, points and digital money for a toll road, a parking lot or a shop, and the like, and examples of a "right" can include a right for using a priority lane, a right for using an area or a road in which vehicle entry is restricted, a preemptive purchase right for merchandize and the like. Accumulated points may be exchangeable for the above-described information, goods, money or right in accordance with the amount of the accumulated points. This makes it possible to improve the content acceptance rate, and to improve the effect of congestion easing and congestion prevention. However, giving away incentives increases the operating cost for a road manager and a system administrator, and thus an order of priority is preferably set for contents to be provided, such that lower-cost contents are preferentially provided. Note that the type and details of an incentive to be given away may be changed in accordance with user characteristics and states. Also, it is also preferred to adopt a mechanism in which for persons that often accept contents (a number of times of acceptance of x or more, or an acceptance rate: x%), persons that accept contents that are not very popular (e.g., a content for requesting to take a train or shift a time of travel) and the like, separately accumulating points are offered, the point cumulative rate is increased, or the probability that a content with an incentive is distributed thereafter at an appropriate timing is increased.

### System Configuration

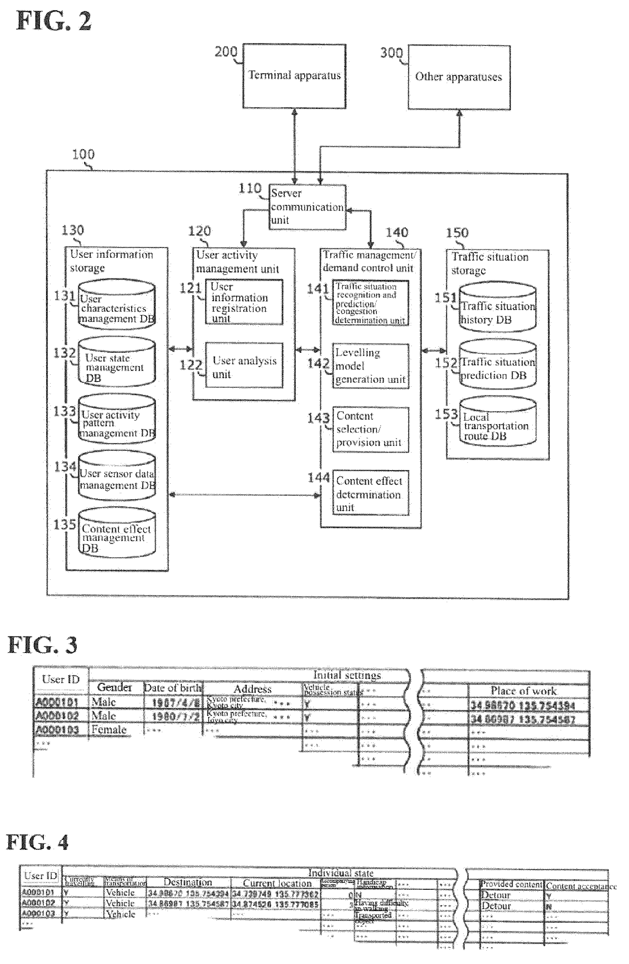

Fig. 2 is a block diagram showing the overall configuration of the activity control system of the first embodiment. An activity control system100 can communicate with a terminal apparatus 200 of a user and another apparatus 300 through the Internet. In Fig. 2, only one terminal apparatus 200 and one other apparatus 300 are shown, but in an actual system, there are the terminal apparatuses 200 of all the registered users (e.g., several hundreds to several tens of thousands) in an area, and there may also be a plurality of other apparatuses 300.

The activity control system 100 can be constituted by a general-purpose computer system provided with a CPU, a memory, a storage apparatus having a large capacity, a communication apparatus and the like. It is desirable to adopt a redundant and robust configuration using a plurality of server apparatuses, and to realize disconcentration processing. The processing and functions of the activity control system 100 which will be described later are realized in a software-like manner by the CPU executing a program stored in the storage. In addition, the terminal apparatus 200 can be constituted by a general-purpose computer system provided with a CPU, a memory, a storage apparatus having a large capacity, a communication apparatus, an input apparatus, a display device and the like. Specifically, smart phones, tablet PCs, mobile PCs, car navigation apparatuses, wearable terminals and the like are envisioned. When using the activity control system 100, notification of individual characteristics and state, sensor data transmission, reception and browsing of contents and the like are enabled by installing a dedicated application program (hereinafter, also simply referred to as an "APP") in the terminal apparatus 200.

The activity control system 100 has, as main functions, a server communication unit 110, a user activity management unit 120, a user information storage 130, a traffic management/demand control unit 140 and a traffic situation storage 150. The server communication unit 110 performs a function of performing data communication with the terminal apparatus 200 and the other apparatus 300. The user activity management unit 120 includes a user information registration unit 121 for registering, in the user information storage 130, individual characteristics and a current state that are input from a user, and a user analysis unit 122 for analysing the activity pattern and the content acceptance situation of a user and the like and recording the analysis result in the user information storage 130. The traffic management/demand control unit 140 includes a traffic situation recognition and prediction/congestion determination unit 141, a levelling model generation unit 142, a content selection/provision unit 143 and a content effect determination unit 144. These functions will be described later in detail.

The user information storage 130 includes a user characteristics management DB 131, a user state management DB 132, a user activity pattern management DB 133, a user sensor data management DB 134 and a content effect management DB 135. Also, the traffic situation storage 150 includes a traffic situation history DB 151, a traffic situation prediction DB 152 and a local transportation route DB 153.

The user characteristics management DB 131 is a database in which initial setting values (individual characteristics) that were input at the time of user registration are recorded for each user. The initial setting values (individual characteristics) are information that doesn't change every time a user travels, such as name, gender, date of birth, address, commuting situation, place of work and work start time/work hours. Fig. 3 shows an example of the data structure of the user characteristics management DB 131. In this example, gender, date of birth, address, vehicle possession status, latitude and longitude of a place of work and the like are recorded in association with each user ID. Of course, a user can change his or her initial setting values on the APP of the terminal apparatus 200 anytime if the user desires to change them.

The user state management DB 132 is a database in which the current and past states of users are recorded. Fig. 4A shows an example of the data structure of the user state management DB 132. In this example, whether or not a user is currently travelling, a means of transportation (e.g., a car, a train, a bus, a bicycle and walk), the latitude and longitude of a destination, the latitude and longitude of a current location, the presence or absence and the number of accompanying persons, handicap information (whether or not a means of transportation except for a car can be used), the presence or absence of a transported object and the like are recorded in association with each user ID. In addition, if a content was provided to this user, information regarding what content was provided, whether or not the content was accepted, and the like are also recorded in real time.

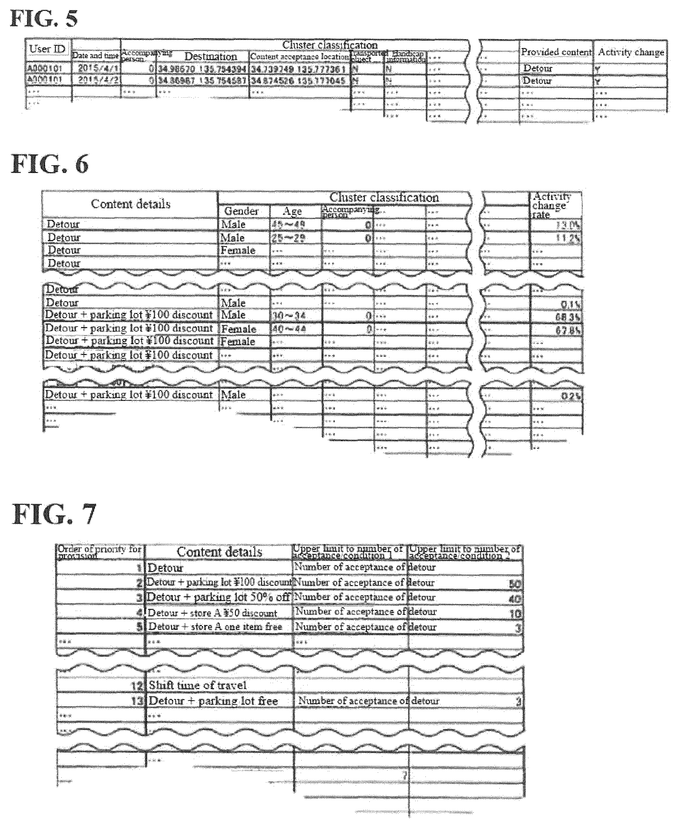

The user activity pattern management DB133 is a database in which information regarding what characteristics each user had and in what state the user was when the user accepted (or did not accept) what type of content in the past and the like is recorded. Fig. 5 shows an example of the data structure of the user activity pattern management DB 133. In this example, information regarding a time and date when a content was provided, the individual state of the user when the user accepted (or rejected) the content (presence or absence of an accompanying person, latitude and longitude of the destination, presence or absence of a transported object and handicap information), the latitude and longitude of the location at which the content was accepted, the type of the provided content, whether or not the user actually changed their activity and the like is recorded in association with each user ID.

The user sensor data management DB 134 is a database in which sensor data received from the terminal apparatus 200 of a user is recorded. As sensor data, for example, GPS data (travelling history data) is recorded.

The content effect management DB 135 is a database in which the activity change rates for contents provided in the past are recorded. Figs. 6 and 7 show an example of the data structure of the content effect management DB 135. Fig. 6 shows a database in which activity change rates (also referred to as acceptance rates) classified according to clusters and content details of a content are recorded, after registered users are divided into a plurality of groups (clusters) based on the individual characteristics and state. An activity change rate is a rate of the number of users that actually changed their activities in accordance with a content to the total number of users to which the content was provided. Fig. 7 shows a database in which an order of priority for providing each content, content details (type) and acceptance conditions (e.g., an upper limit to the number of people that can accept the content) are recorded.

The traffic situation history DB 151 is a database in which the history of past traffic situations (congestion situations) is recorded. Also, the traffic situation prediction DB 152 is a database in which traffic situations (congestion situations) of the present to the future predicted based on data collected from the terminal apparatuses 200 and the other apparatus 300 are recorded.

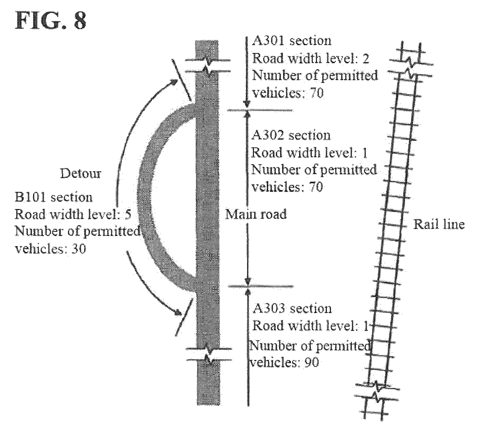

The local transportation route DB 153 is a database in which map information including traffic information of roads, rail lines and the like, and the number of permitted vehicles for each road (in each section, using branches and intersections as section borders) are recorded. Every time there is a change in map information or the number of permitted vehicles due to a blocked road due to a new road being constructed, construction or an accident, the records in the local transportation route DB 153 are updated. Fig. 8 schematically shows information recorded in the local transportation route DB 153. A section ID, a road width and the number of permitted vehicles for each road are recorded in association with map information of a road (main road or detour) and a rail line. This information is used for congestion prediction, and search for a detour and an alternative means of transportation.

### Operations of System

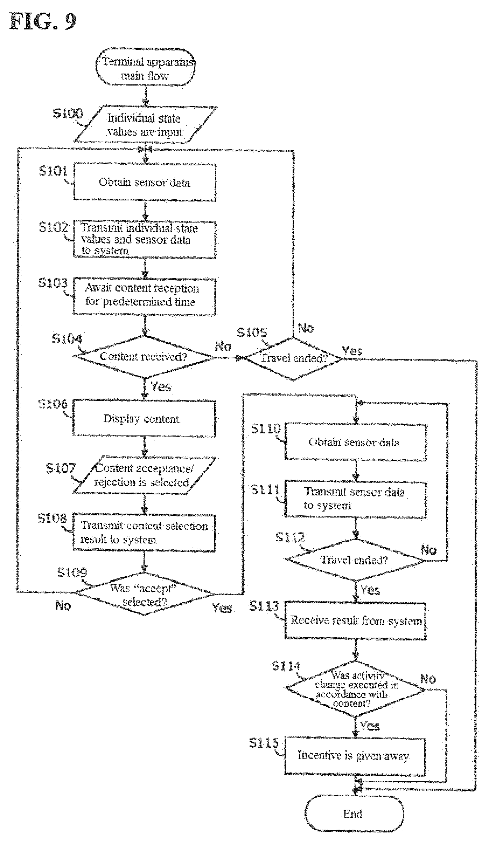

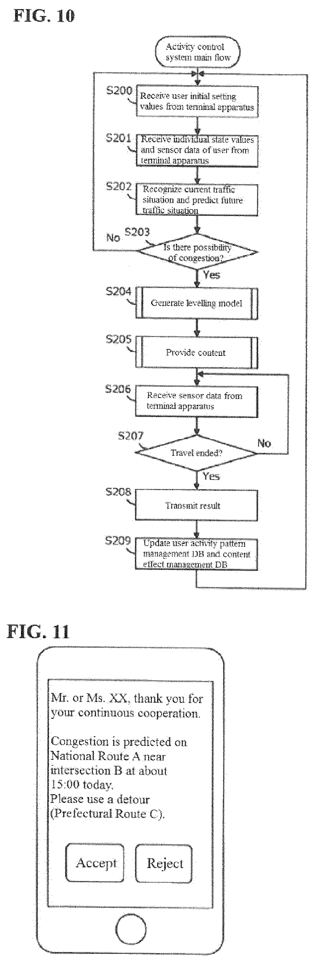

Next, the processing flow of the activity control system 100 and the terminal apparatus 200 will be described. Fig. 9 is a processing flowchart of the terminal apparatus 200, and Fig. 10 is a processing flowchart of the activity control system 100. Note that it is assumed that installation of a dedicated APP in the terminal apparatus 200, user registration and input of initial setting values (individual characteristics) are already complete.

### (1) Operations of Terminal Apparatus 200

When starting to travel by car, a user starts the dedicated APP of the terminal apparatus 200, and inputs individual state values such as a destination, a scheduled departure time, a scheduled arrival time, a route and the presence or absence of a fellow passenger (step S100). The terminal apparatus 200 then obtains, from a sensor mounted on the terminal apparatus 200, sensor data such as GPS information, acceleration information and time information (step S101) in order to recognize the user's current state, and transmits the user's state obtained by the dedicated APP and the sensor data to the activity control system 100 (step S102). The activity control system 100 continually predicts traffic situation changes based on the data collected from a plurality of users in the area, and provides a content to users as necessary (which will be described in detail later). Note that when a user starts travelling by car, the APP may automatically start based on the schedule on the calendar, location information from a GPS, the user's usual activity history and the like, instead of the user performing a start operation of the APP by himself or herself.

The dedicated APP of the terminal apparatus 200 awaits a content from the activity control system 100 (steps S103 and S104: No). Until the travel ends (the destination is reached or the destination is changed) (step S105: No), the terminal apparatus 200 periodically notifies the activity control system 100 of the user's individual state values and sensor data (steps S101 and S102). With such a mechanism, the user's state is collected and accumulated in the activity control system 100 in real time.

Upon receiving a content from the activity control system 100 (step S104: Yes), the dedicated APP of the terminal apparatus 200 presents the content to the user (step S106). Fig. 11 shows an example of the content displayed on the screen of the terminal apparatus 200. Information that recommends a detour is displayed, and buttons for selecting whether or not to accept this content are displayed as well. The user presses an "accept" button if accepting the content and following the recommendation, and presses a "reject" button if the user does not desire to follow the recommendation (step S107). The user's selection result is sent to the activity control system 100 (step S108).

There is a possibility that the buttons are not pressed if the user does not notice the content, or if the user is not interested in the content. Unless one of the buttons is pressed for a predetermined time, the dedicated APP determines that the content was ignored, and the content is hidden or selection of a button is disabled. In addition, in the case of a content with a predetermined upper limit to the number of people that can accept the content, when the number of users that accepted the content reaches the upper limit, this information is notified from the activity control system 100 to the terminal apparatus 200, and the content is hidden (or selection of the button is disabled).

If the user accepts the content (step S109: Yes), the procedure advances to step S110. The terminal apparatus 200 periodically obtains GPS data and sensor data such as acceleration (step S110) and transmits this data to the activity control system 100 (step S111) until the travel ends (until the destination is reached or the destination is changed) (step S112). This makes it possible for the activity control system 100 to recognize a travelling route, a means of transportation and the like for the user after the content was accepted.

After the travel ends, a result of whether or not the travelling route and the means of transportation that the user actually adopted or the travelling time satisfied the condition of the content accepted by the user is transmitted from the activity control system 100, and accordingly the terminal apparatus 200 receives the result information (step S113). Note that in this embodiment, the determination of whether or not the condition of the content was satisfied (whether or not the user changed their activity in accordance with the recommendation of the content) is performed by the activity control system 100, but a configuration may be adopted in which the determination is performed by the terminal apparatus 200 and the result is notified from the terminal apparatus 200 to the activity control system 100.

If the user executed a travel that satisfies the condition of the content (step S114: Yes), a message that praises the user's activity change and the like is displayed on the dedicated APP (step S115). Also, if the content is a content for giving away an incentive, the incentive is given to the user. A method for giving away an incentive may be any method, for example, a coupon that can be used in a shop is displayed, an ETC (electronic toll collection system) discount code is displayed, and points or digital money are provided.

### (2) Operations of Activity Control System 100

Upon receiving initial setting values (individual characteristic values) from the terminal apparatus 200 of each user, the activity control system 100 (the user information registration unit 121) saves the data in the user characteristics management DB 131 (step S200). When a user performs new registration (when a dedicated app is installed), the individual characteristics of a user is changed, and the like, this processing is executed.

Also, upon receiving individual state values and sensor data from the terminal apparatus 200 of each user, the activity control system 100 (the user information registration unit 121) records the data in the user state management DB 132 and the user sensor data management DB 134 (step S201). This processing is executed every time data is sent from the terminal apparatus 200 (see steps S102 and S111 in Fig. 9).

The activity control system 100 (the traffic situation recognition and prediction/congestion determination unit 141) recognizes the current traffic situation based on the individual state values and sensor data collected from users, and traffic situation-related information collected from the other apparatus 300, and predicts a traffic situation in the near future (e.g., several tens of minutes to several hours later) (step S202). As the traffic situation-related information, any information such as calendar information (e.g., a date, a day of the week, a holiday and the season), local event information, information from sensors installed on roads (e.g., traffic counters), weather information, construction site information and congestion prediction information may be used, as long as the information is information that can be used for recognizing or predicting a traffic situation. A result recognized or predicted in step S202 is saved in the traffic situation history DB 151 and the traffic situation prediction DB 152.

The activity control system 100 (the traffic situation recognition and prediction/congestion determination unit 141) determines, based on the result of step S202, whether or not in a road in the area, congestion has already occurred or the possibility that congestion will occur is high. If congestion is not likely to occur for a while, there is no need to take any measure, and thus no processing is performed (step S203: No). If it is determined that congestion has occurred, or congestion is likely to occur in the near future (step S203: Yes), the procedure advances to step S204.

In step S204, the activity control system 100 (the levelling model generation unit 142) performs calculation so as to figure out how to temporally and spatially disconcentrate vehicles in the area and to what degree the number of vehicles are to be reduced in order to enable congestion easing or prevention of congestion occurrence. A state is ideal in which people in the area can travel using means of transportation and routes that they desire as much as possible, and congestion does not occur.

For example, as shown in Fig. 8, a situation is envisioned in which the area serving as a target includes a main road and a detour that are public roads, and a train can also be used. Assume that the number of permitted vehicles (an upper limit to the number of vehicles with which congestion does not occur) for each road is 70 for the main road and 30 for the detour. In step S202, it is assumed that the number of vehicles that would be travelling on each of the roads at 15:00 is predicted as 100 for the main road (congestion) and 10 for the detour (non-congestion). In this case, reducing the number of vehicles that are travelling on the main road at 15:00 to 70 or less in order to ease or prevent the congestion in the area is the purpose of the activity control system 100. At this time, vehicles may be guided to the detour, but the detour is not allowed to be congested. Accordingly, a levelling model for achieving the above purpose will correspond to a countermeasure of "moving 20 vehicles from the main road to the detour, and causing other 10 vehicles to change passage times or means of transportation".

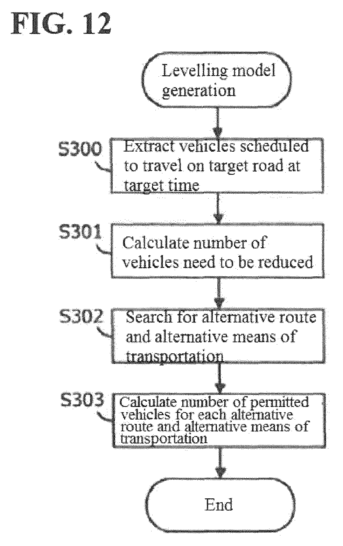

Fig. 12 is a detailed flow of levelling model generation processing (step S204). The levelling model generation unit 142 extracts vehicles scheduled to travel on a target road (a road for which congestion easing is desired) at a target time (a time when congestion easing is desired) from vehicles that are travelling or scheduled to start travelling (step S300). In the above-described envisioned example, vehicles that are predicted to travel on the main road at 15:00 are extracted, and it can be seen that the number of the vehicles is 100. Next, the levelling model generation unit 142 calculates how many vehicles need to be reduced from the target road at the time (step S301). In the above-described envisioned example, the number of permitted vehicles for main road is 70, and thus according to the calculation, 30 vehicles need to be reduced from the main road at 15:00. Next, the levelling model generation unit 142 searches for another route and means of transportation in the area (step S302). Specifically, map information and information regarding the number of permitted vehicles from the local transportation route DB 153 are referred to, and an alternative route and an alternative means of transportation are selected. At this time, the alternative route and alternative means of transportation are preferably selected based on criteria that a travelling time and a travelling distance are preferred to be shorter, a public road is better than a toll road and the road width is preferred to be wider. Next, the levelling model generation unit 142 calculates the number of permitted vehicles for each alternative route and each alternative means of transportation (step S303). In the above-described envisioned example, the number of permitted vehicles is calculated as 20 vehicles for a detour and 10 vehicles for taking a train or shifting a time of travel.

When a levelling model is generated as described above, the procedure advances to step S205 in Fig. 10, and the activity control system 100 (the content selection/provision unit 143) determines a target for providing a content, the content details (type) of the content to be provided and the like, and transmits the content to necessary users. At this time, based on information in the user characteristics management DB 131, the user state management DB 132 and the content effect management DB 135, the content selection/provision unit 143 determines content details of a content to be provided and users in the area to which the content is to be provided. Contents that cannot be executed, contents that give users stress or anxiety in terms of safety and the like are prevented from being provided by taking the characteristics and states of users and the like into consideration, while a content is preferentially provided to users with a high possibility of accepting the content and changing their activities, by taking the past content acceptance rates and the like into consideration.

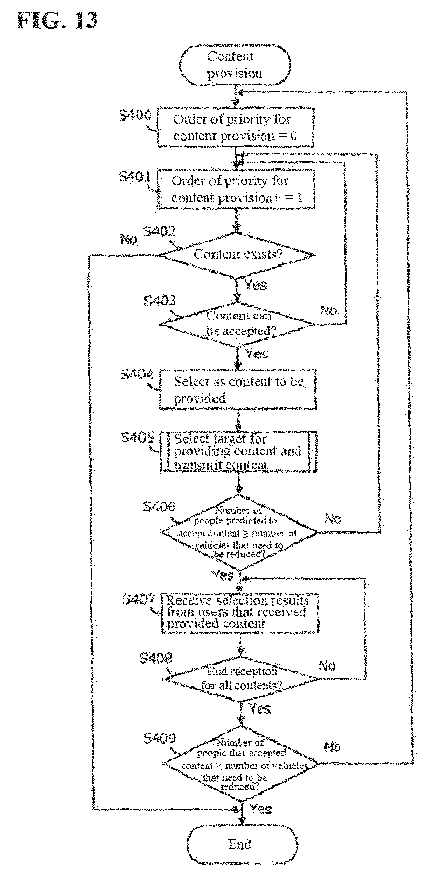

Fig. 13 is a detailed flow of content provision processing (step S205). First, the content selection/provision unit 143 initializes an order of priority for content provision to 0 (step S400). The content selection/provision unit 143 increments the order of priority for content provision (step S401), while taking note on contents registered in the content effect management DB 135 (see Fig. 7) in a descending priority order for provision (step S402). The content selection/provision unit 143 determines whether or not a content candidate is a content that can be accepted in a current environment (step S403), and if the content has a possibility of being accepted, the content candidate is selected as a content to be provided (step S404). For example, if a content for recommending use of a detour is provided in an area without a detour, or a content for recommending an alternative means of transportation is provided in an area in which there is no train, bus or the like, users cannot accept such a content, and thus in step S403, those contents are excluded from contents to be provided. The processing of steps S401 to S403 corresponds to the processing of the activity determination means for determining an activity that users need to perform in order to bring the overall situation closer to an overall optimum state.

When a content to be provided is selected, the content selection/provision unit 143 selects users serving as a target for providing the content to be provided, and transmits the content to the terminal apparatuses 200 of the users (step S405).

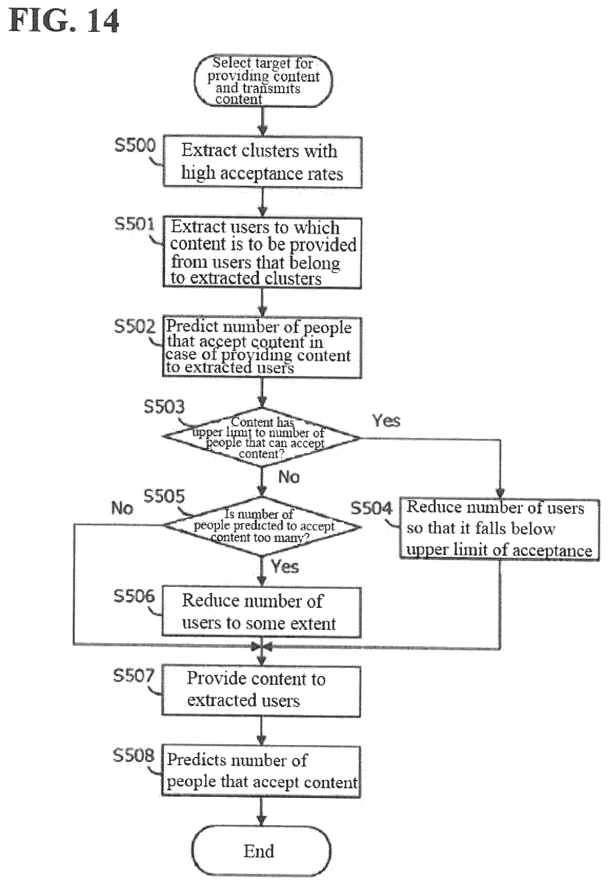

Fig. 14 is a detailed flow of step S405. The content selection/provision unit 143 references the content effect management DB 135 (see Fig. 6), and extracts a cluster with a high content acceptance rate (activity change rate) for the content to be provided (step S500). A cluster extraction condition is set in advance, for example, "all the clusters with a content acceptance rate that is greater than or equal to x%", "a cluster group that includes y people or more", and "z clusters with highest content acceptance rates". Next, the content selection/provision unit 143 extracts users to which the content is to be provided from the users that belong to the extracted clusters (step S501). In this embodiment, users that are not awaiting another content, have not rejected to accept this content yet, and have no problem with the driving level or stress level are extracted from the users that belong to the clusters,

A user's driving level can be determined from his or her past travelling history, accident history, traveling distance, driving experience (years) and the like. As an example, the driving level may be determined from "the widths of roads on which the user has travelled by car before". The road widths are classified into about ten stages, and as in Fig. 8, a road width level is set for each road. Among the widths of the roads on which the user has travelled before, the lowest road width level value is defined as a driving level of the user. In other words, a person that uses a road with a narrow road width is considered to be good at driving. For example, a content for recommending the detour (a road width level=5) in Fig. 8 is not provided to users whose driving level is less than 5. The method for determining a driving level is not limited thereto. For example, instead of classifying road widths into stages of levels, the driving level may be determined based on a road width (how many meters the road width is) itself. Moreover, if the user has an experience of travelling on the detour (or has travelled many times), it may be determined that the user's driving level is high. Also, the longer the accumulated traveling distance of a user is, or the longer the driving experience (years) is, the higher the driving level may be determined to be. Recommendation of a detour or a road that is difficult to drive is desirably sent only to people whose driving level is high. Also, a driving level may be determined by evaluating, based on sensor data from an acceleration sensor mounted to a vehicle, whether or not the user is good at using a brake and an accelerator.

A stress level is a degree of stress that a user receives by the user receiving a content or by changing their activity in accordance with a content. The stress level is determined from a user's individual state, contents provided to the user in the past, the user's situation at that time, the acceptance rate of the content and the like. For example, regarding a user with any record in "handicap information" of the user state management DB 132 (e.g., a person having difficulty in walking), and a user with many "accompanying persons", it is predicted that a means of transportation other than a car cannot be accepted (if requested to change to a means of transportation other than a car, the user only feels stressed), and thus such content is not provided. Also, if a user has already started driving a car, it is predicted that change to another means of transportation cannot be accepted, and thus such content is not provided. Moreover, in the case where the same content as a content that is about to be provided to a user was provided to the user in a previous predetermined time period (e.g., one week) but was not accepted, and the characteristics/state of the user (except for location information) are the same as those at that time, it is highly possible that repeatedly providing the same content gives the user stress (discomfort), and thus in such a case, it is desirable that the content is not provided to the user.

The content selection/provision unit 143 predicts the number of people that accept a content to be provided in the case of distributing the content to the users extracted in step S501 (step S502), The number of people predicted to accept the content can be calculated by multiplying the number of people extracted in step S502 by the content acceptance rate of each cluster.

If there is an upper limit to the number of people that can accept a content to be provided (step S503: No), and the number of people predicted to accept the content exceeds the upper limit of acceptance, the content selection/provision unit 143 reduces the number of users so that it falls below the upper limit of acceptance (step S504). For example, in the case of a content for guiding to a detour, the number of users is narrowed down to be less than or equal to the number of permitted vehicles for the detour. In addition, if there is a limit to the number of incentives to be issued (e.g., discount coupons) that are added to the content, the number of users is narrowed down to less than or equal to the number of incentives to be issued. At this time, if users with high content acceptance rates are preferentially selected, a great effect on content acceptance and congestion easing can be expected. However, randomly narrowing down the users is also preferred. This is because by randomly selecting users, there is no unevenness in the users to which a content is to be provided, and unfairness among the users is eliminated. Moreover, there is a possibility that even a user usually with a low content acceptance rate accepts a content depending on a situation, and there is also a possibility that the user becomes experienced by accepting the content in this manner, and the acceptance rate increases from this time.

If there is no upper limit to the number of people that can accept the content to be provided (step S503: Yes), the content selection/provision unit 143 narrows down the users (step S506), only when the number of people predicted to accept the content is excessive compared to the number of vehicles to be reduced (step S505: Yes). This is because when it is sufficient to reduce several vehicles, if the content is distributed to several tens of thousands of people, there is a possibility that other traffic is adversely affected. Therefore, for example, the users are preferably narrowed down to the number of users in the range that is several to several tens of times the number of vehicles to be reduced.

When users to which the content needs to be provided are determined as described above, the content selection/provision unit 143 transmits the content to be provided to the terminal apparatus 200 of each of the users (step S507). At this time, description of content details may be changed in accordance with the activity changeability level of each user. This is because it then becomes possible to expect improvement in acceptance rate of the content. For example, a sentence such as "thank you for your continuous cooperation" is preferably given to users with a high content acceptance rate. People feel pleased when thanked or complimented even by a machine, and thus it can be expected that the probability that the users will accept contents after that as well, and the probability that the users will accept even a slightly unreasonable request increase. Also, in the case of asking a user to use a route that is new to the user, the advantage of taking the route is preferably described in detail. This is because if the user is informed that congestion can be avoided and a trip time can be reduced by taking a detour rather than taking the user's usual route, it can be expected that the content acceptance rate after that will increase, and the possibility that the detour is taken without providing the content can be expected.

After that, the content selection/provision unit 143 predicts the number of people that will accept the content (step S508), and the procedure advances to step S406 in Fig. 13. In step S406, the content selection/provision unit 143 checks whether or not the number of people that are predicted to accept the content (if a plurality of types of contents are provided, the total number of people that are predicted to accept the contents) has reached the number of vehicles that need to be reduced from the road for which congestion easing is desired (step S406). If it can be predicted that the vehicles can be reduced by the necessary number of vehicles (step S406: Yes), the procedure advances to step S407, and if the number of people predicted to accept the content has not reached the necessary number of vehicles (step S406: No), the procedure returns to step S401, where providing another content is considered.

After the content is provided, the content selection/provision unit 143 receives selection results (acceptance/rejection) from the terminal apparatuses 200 of the users for a certain time period (steps S407 and S408). In the case of timeout, or if the upper limit to the number of people that can accept the content is reached, the reception ends, and the procedure advances to step S409. If the number of users that accepted the content has reached the number of vehicles that need to be reduced from the road for which congestion easing is desired (step S409: Yes), the procedure advances to step S206 in Fig. 10. On the other hand, if the number of people that accepted the content is not sufficient (step S409: No), the procedure returns to step S400, where the content is redistributed. In the case of redistribution, the same content as the content that has already been provided may be selected, or another content may be preferentially selected. When selecting a target to which the content is to be provided (users), it is preferred that users different from the users to which the content was previously provided are selected with priority.

In step S206 in Fig. 10, the user information registration unit 121 receives individual state values and sensor data from the terminal apparatuses 200 of the users that accepted the content, and saves the data in the user state management DB 132 and the user sensor data management DB 134. Whether or not each of the users has reached the destination (or changed their destination) is determined based on the sensor data, and the sensor data (in other words, the travel history) of the user is continuously recorded until the destination is reached (or the destination is changed) (step S207).

In step S208, the content effect determination unit 144 checks whether or not each of the users that received the provided content actually changed their activity in accordance with the content. Specifically, the content effect determination unit 144 determines, based on the records of the sensor data (travelling history) of the user, whether or not a travelling route and a means of transportation that the user actually adopted or a travelling time satisfied the condition of the content accepted by the user, and transmits the determination result to the terminal apparatus 200 of the user.

Lastly, the content effect determination unit 144 analyses what characteristics each user had / in what state the user was when the user changed their activity in accordance with the content, and records the analysis result in the user activity pattern management DB 133. Moreover, the content effect determination unit 144 measures the effect of traffic demand control by performing data mining, and analyses the activity pattern of the entire area. For example, the content effect determination unit 144 performs clustering on all the users registered in the system based on characteristics/state commonality, organizes an approximate percentage of activity change that can be expected, the content details of a content that was provided, and the characteristics and states of people to which the content was provided, and records the information in the content effect management DB 135. The effect determination result is used for selecting a target to which a content is to be provided as described above. A target for providing a content can be more appropriately selected by performing content effect determination periodically or every time each user changes their activity, and the content acceptance rate can be expected to improve.

### Example of Content Provision

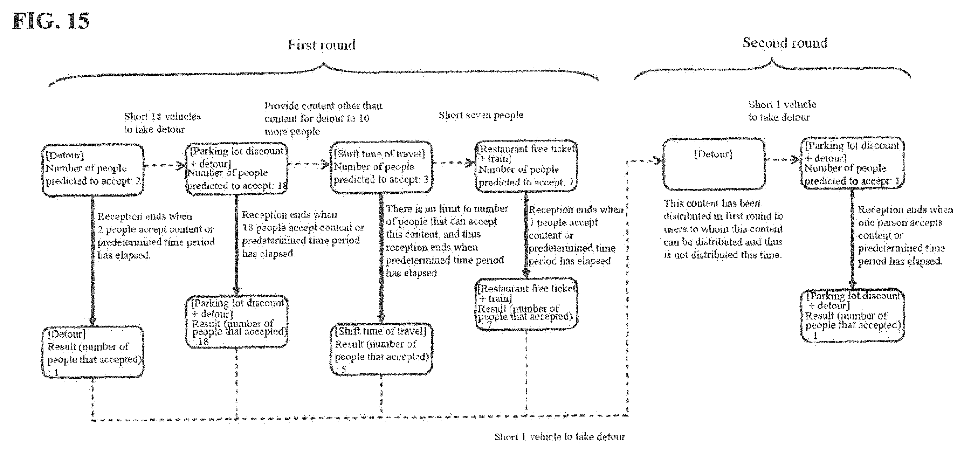

Next, a specific example of content provision will be described. An example is envisioned in which traffic demand control is performed such that in the case where it is predicted that in the area shown in Fig. 8, 100 vehicles will travel on the main road at 15:00, and 10 vehicles will travel on the detour, "20 vehicles are to be moved from the main road to the detour at 15:00, and 10 more vehicles are to change their passage time or means of transportation". Fig. 15 is a flow diagram showing a flow of content provision. The abscissa in Fig. 15 is a time axis, and indicates a state in which content provision is executed from the left.

### (1) Provision of "Detour" Content

First, a "detour" content with the highest order of priority for provision is selected. The "detour" content is a content for requesting cooperation on a detour. The "detour" content that does not involve giving away an incentive and is inexpensive, and is therefore preferentially executed.

Assume that it has been confirmed, based on various DBs, that "10% of people that correspond to cluster number a, b or c accept the content if requested to take a detour" and that "there are 20 people that are scheduled to travel on the main road at 15:00, correspond to the cluster number a, b or c, and have no problem with the driving level or stress level". 20 people x 10% = 2 people are predicted to cooperate, and the "detour" content is then distributed to the 20 people. The system awaits selection results (acceptance/rejection) from these 20 people, and ends the reception when the number of people that accepted the content reaches the number of people predicted to accept the content (here, two people), or a certain time period has elapsed. In the example in Fig. 15, it is assumed that one user has accepted the content.

### (2) Provision of "Parking Lot Discount + Detour" Content

The number of people that are predicted to accept the "detour" content is two, and in order to achieve the purpose (move 20 vehicles to the detour), activity change by 18 more people is necessary. In view of this, a "parking lot discount + detour" content of the next highest order of priority for provision is provided. This content is a content to which an incentive of a parking lot discount ticket is added.

Assume that it has been confirmed, based on various DBs, that "50% of people that correspond to a cluster number d, e or f accept the content in response to an offer that a parking lot discount ticket is given if the user moves to the detour", and that "there are 80 people that are scheduled to travel on the main road at 15:00, correspond to the cluster number d, e or f, are different from the 20 people to which the content has already been distributed in (1), and have no problem with the driving level or stress level". 80 people x 50% = 40 people are predicted to cooperate. There is no particular limit to the number of parking lot discount tickets to be issued. However, if all the 40 people move to the detour, the detour will be congested. In view of this, 36 people are randomly extracted from the 80 people, and the "parking lot discount + detour" content is distributed to the 36 people. The system await selection results (acceptance/rejection) from these 40 people, and ends the reception when the number of people that have accepted the content reaches 18, or a certain time period has elapsed. In the example in Fig. 15, it is assumed that 18 users have accepted the content.

### (3) Provision of "Shifting Time of Travel" Content

It can be expected that 20 vehicles move from the main road to the detour due to previous content provision. In order to achieve the purpose, 10 more vehicles need to be reduced from the main road (however, it is impossible to move more vehicles to the detour, and thus change of the passage time or the means of transportation is necessary). In view of this, a content of the highest order of priority for provision among the contents except for the contents for a detour, namely, a "shifting a time of travel" content is provided.

Assume that it has been confirmed, based on various DBs, that "5% of people that correspond to a cluster number g, h or i accept the content if requested for shifting a time of travel", and "there are 60 people that are scheduled to travel on the main road at 15:00, correspond to the cluster number g, h or i , are different from the people to which a content has already been distributed in (1) or (2) and have no problem with the driving level or stress level". 60 people x 5% = three people are predicted to cooperate, and the "shifting a time of travel" content is distributed to the 60 people. The system awaits selection results (acceptance/rejection) from these 60 people, and when a certain time period has elapsed, ends the reception. Any number of people may shift a time of travel, and thus an upper limit to the number of people that can accept the content does not need to be particularly set. In the example in Fig. 15, it is assumed that five users have accepted the content.

### (4) Provision of "Restaurant Free Ticket + Train" Content

The number of people that are predicted to accept the "shifting a time of travel" content is three, and in order to achieve the purpose (change the passage times or means of transportation of 10 people), activity change by other seven people is necessary. In view of this, a "restaurant free ticket + train" content of the next highest order of priority for provision among the contents except for the contents for a detour is provided. This content is a content to which an incentive of a restaurant free ticket is added.

Assume that it has been confirmed, based on various DBs, that "60% of people that correspond to a cluster number j, k or 1 accept the content in response to an offer that a restaurant free ticket is given if the user travels by train", and "there are 300 people that are scheduled to travel on the main road at 15:00, correspond to the cluster number j, k or 1, are different from the people to which a content has already been distributed in (1), (2) or (3), and have no problem with the driving level or stress level". 300 people x 60% = 180 people are predicted to cooperate. Cost is required for the administrator to issue restaurant free tickets, and thus it is assumed that the number of the tickets to be issued is limited to 30. In addition, three people can be expected to cooperate by "shifting a time of travel", and thus it is sufficient that other seven people accept the "restaurant free ticket + train" content. In view of this, 30 people are randomly extracted from the 300 people, and the "restaurant free ticket + train" content is distributed to the 30 people. The system awaits selection results (acceptance/rejection) from these 30 people, and when the number of people that have accepted the content reaches seven or a certain time period has elapsed, ends the reception. In the example in Fig. 15, it is assumed that seven users have accepted the content.

### (5) Content Redistribution

According to the totalled selection results that have been received from the users, the number of people that have accepted change of a passage time or a means of transportation has reached a target number of 10, while the number of people that accepted the detour has not reached a target number of 20 (one person short). Therefore, in order to find one user that cooperates on the detour, content redistribution will be performed.

However, the "detour" content of the highest order of priority for provision has already been distributed in (1) to the users to which the content can be distributed, and thus this content is not distributed this time. The "parking lot discount + detour" content of the next highest order of priority for provision was not distributed to all the users in (2), and there is a possibility that there is a user that could not select the content distributed in (2) because the user could not make the deadline of the reception for content selection. Therefore, the "parking lot discount + detour" content will be distributed again. At this time, the users that already have accepted another content, and the users that rejected the content in (2) are excluded from a target (i.e. those people) to which the content is to be provided.

The purpose is achieved when one person accepts the content, and thus the content provision processing ends.

According to the configuration of this embodiment described above, when congestion occurs or congestion occurrence is predicted, a traffic flow in an area can be disconcentrated by providing contents to a portion of the users in the area and causing users to change their activities. This makes it possible to perform congestion easing and congestion prevention in the roads in the area, and to obtain an effect of accompanying CO₂ emission reduction, accident reduction and the like. In addition, the type (content details) of a content to be provided and a target for providing the content are determined in consideration of the characteristics and states of users, the content acceptance rate and the like, and thus it is possible to realize effective and efficient activity control (traffic demand control).

### Second Embodiment

A second embodiment is an example in which the activity control system according to the above embodiment is applied to purchaser activity control (purchase disconcentration)

In a store such as a supermarket and a department store, there are cases where the store operation is hindered (confusion in the store due to many people, occurrence of shoplifting due to inadequate security, stockout of a specific merchandize, a long cashier waiting line, customers being unable to park their cars in a parking lot and giving up entering the store, and the like) by purchasers concentrating due to a special sale day of the store, a nearby event and the like, or by constant crowdedness due to being popular, and the like. In order to avoid such problems caused by purchaser concentration, the activity control system according to the second embodiment dissolves the concentration of people in a store and each sales department and disconcentrates a purchase target by providing an individual content having different content details to each purchaser and causing the customer to change their activity (change a visiting time, change an item to purchase, change the number of items to purchase and the like). In other words, the purpose of the activity control system of the second embodiment is to bring the purchaser distribution situation in a store and the inventory situation (the overall situation) closer to the number of people and inventory to an extent that a store operation is not hindered (overall optimum state).

### System Overview

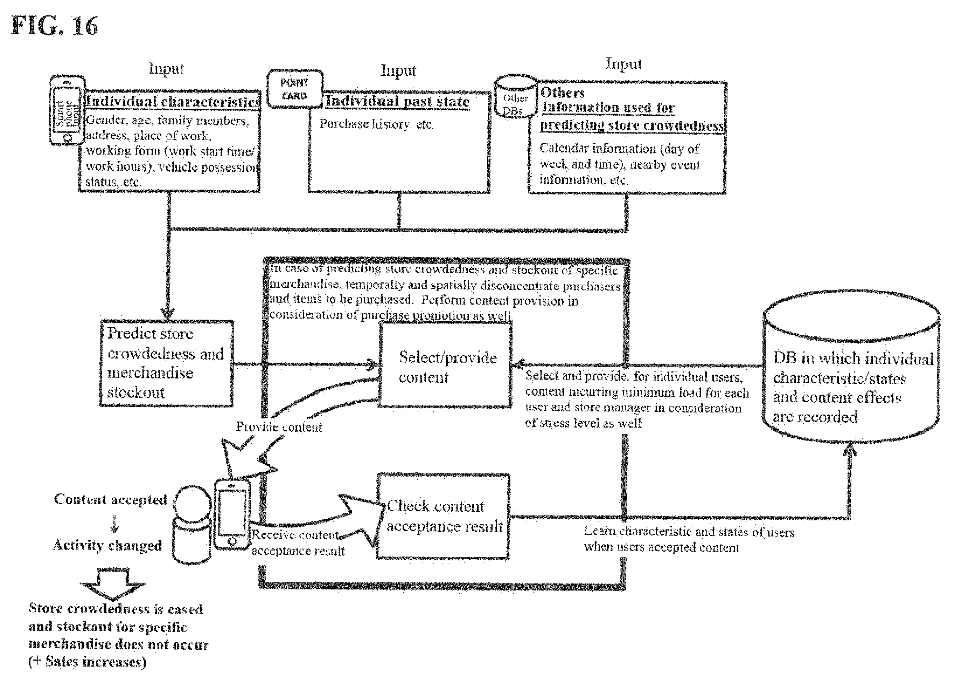

Fig. 16 shows an overview of the activity control system according to the second embodiment (hereinafter, also simply referred to as the "system"). The activity control system is constituted by a server apparatus on the Internet, and can communicate with the terminal apparatus of each user and other apparatuses (e.g., a server, a database and a sensor that provide store information and the like) via the Internet.

Each user performs user registration in advance using his or her terminal apparatus, and sets individual characteristics (e.g., gender, age, family members, address, place of work, working form (work start time/work hours), and vehicle possession status) in the system. In addition, data of the individual state of each user (e.g., purchase history, frequently visited store and frequency of visiting the store) is collected in the system from the records in a point card or the like of the user.

The system predicts crowdedness, merchandise stockout and the like of each store based on the data of the characteristics and state of each user, store-related information (e.g., calendar information, nearby event information, store advertisement/bargain information, store inventory status, information from a sensor installed in the store and weather information) that can be obtained from other apparatuses. If crowdedness in a store or each sales department and merchandise stockout could be predicted, the system provides a content for recommending activity change to users in order to temporally and spatially disconcentrate purchasers. If users that saw the content received by the terminal apparatuses accept the recommendation of the content and change their activities (change a visiting time, change an item to purchase, change the number of items to purchase, change shops and the like), easing and prevention of crowdedness and stockout prevention can be realized.

Meanwhile, the system checks whether or not each user has accepted the content and whether or not each user actually changed their activity. The system then learns what content was accepted, and what characteristics each user had or what state the user was in when the user accepted the content, and accumulates this information in a database. This information is used for selecting users that serve as a target for providing a content, selecting content details and the like when a content is provided thereafter.

If there are a plurality of affiliated stores (e.g., five chain stores managed by the same owner), a content for guiding customers to a store that is not crowded is preferably provided to customers whose sphere of activity is broad (customers that do not go to a certain store). At this time, by giving away an incentive such as a discount ticket that can be used only in a specific store, the content acceptance rate can be improved. It is also preferable to increase the normal purchase rate by randomly extracting a portion of customers whose purchase rate is high, and providing a significantly beneficial content such as a free ticket to the extracted customers, instead of providing a discount ticket to all the customers whose sphere of activity is broad.

It is also preferable to disconcentrate sales time slots in a day depending on the person. For example, a discount ticket that can be used in a time slot when the store is not crowded may be provided to users that seem to be able to visit any time in a day, and a discount ticket that can be used at homecoming time and at night time may be provided to users that work in the daytime.

The visiting frequency of a purchaser that purchases the same merchandize only can be increased by providing a discount ticket for the merchandize to the purchaser. Regarding purchasers that purchase similar merchandize without being particularly picky, a discount ticket for merchandize randomly selected from similar merchandize or a discount ticket for merchandize whose stock quantity is high is preferably provided in order to prevent stockout of a specific merchandize.

There is a high possibility that an effective result is not obtained even if the same content is indiscriminately provided to all the people in an area. There is also a possibility that store crowdedness and merchandize stockout occur if all the people change their activities in accordance with the guidance of a content. Therefore, it is preferable to predict, using data mining, a content that needs to be provided, people to which the content is to be provided, and the percentage of the people that change their activities, and to provide a content having appropriate content details to appropriate people focused on minimum required people. When selecting a target for providing a content and content details to be provided, individual characteristics, individual states, individual activity change stages, the levels of stress caused by changing the activities and the like are preferably taken into consideration. This makes it possible to perform control such that regarding people that feel stressed by a content being provided and by changing their activities, no content is provided, or limited contents that are unlikely to give stress are provided. For example, content details that cause an unreasonable activity such as content details that guide a user to come in a time slot in a day when the user absolutely cannot come and content details that guide a user to a store that is too far give users stress, and thus providing such contents need to be avoided.

In order to increase the acceptance rate for content to be provided to people, provision of information for improving their knowledge level (information that food containing such and such material is good for health although this material makes the food slightly more expensive, information that a new product in a popular sweets line will be released, and the like) is performed. This contributes to increasing customer spending and broadening a purchase range.

An incentive may be given away to people that changed activities. Incentives are information, goods, money, rights and the like that are likely to please users. For example, examples of "information" include detailed road traffic information, information regarding secret sales and the like, examples of "goods" include comfort items for travel by train and the like, examples of "money" include cash, discount tickets, free tickets, coupon tickets, parking meter extension tickets, points and digital money for a toll road, a parking lot or a shop, and the like, and examples of a "right" include a right for using a priority lane, a right for using an area or a road in which vehicle entry is restricted, a preemptive purchase right for merchandize and the like. Accumulated points may be exchangeable for the above-described information, goods, money or right in accordance with the amount of the accumulated points. This makes it possible to improve the content acceptance rate, and to improve the effect of crowdedness easing and stockout prevention. However, giving away incentives increases the cost for a store manager, and thus an order of priority is preferably set for contents to be provided, such that lower-cost contents are preferentially provided. Note that the type and details of an incentive to be given away may be changed in accordance with user characteristics and states. Also, it is preferred to adopt a mechanism in which separately accumulating points are offered, the point cumulative rate increases, or the probability that a content with an incentive is distributed thereafter at an appropriate timing increases, for people that often accept contents (the number of times of acceptance: x or more or an acceptance rate: x%), people that accept contents that are not very popular (e.g., a content for requesting to take a train or shift a time of travel) and the like.

In a supermarket, if merchandize being put into a shopping basket is recognized in real time (e.g., if an IC tag is attached to the merchandize, and an IC reader is attached to the shopping basket, the merchandize put into the shopping basket can be identified immediately), merchandize that matches the merchandize put into the shopping basket may be recommended or a discount ticket may be provided.

The specific configuration of the system, the operations of content provision and the like can be designed in the same manner as those in the first embodiment, and thus its description is omitted here.

According to the configuration in this embodiment described above, in order to avoid problems caused by purchaser concentration, it is possible to reduce concentration of people in a store and each sales department and to disconcentrate purchase targets by providing a content to a portion of the users in an area, and asking the users to change their activities (change a visiting time, change an item to purchase, change the number of items to purchase and the like). This makes it possible for store keepers/purchasers to manage the store/enjoy shopping without feeling stressed very much due to too many people in the store. It is also possible to prevent reduction in sales due to crowdedness (situations in which customers cannot enter the store due to crowdedness, a cashier waiting line is too long and customers give up purchasing a merchandise, only a specific merchandise attracts attention, crowdedness and stockout damage the reputation of the store, and the like).

### Other Embodiments

The configurations in the above embodiments merely indicate one specific example of the present invention, and do not intend to limit the scope of the present invention. The present invention can adopt various specific configurations without departing from the technical idea. Moreover, the activity control system of the present invention can be applied to various applications for the purpose of controlling the activities of a large number of users to achieve overall optimization.

For example, in the above-described embodiments, a terminal apparatus (e.g., a smart phone) operated by a user is envisioned, but in the case of a self-driving car, content can also be distributed to the control unit (artificial intelligence) of the self-driving car. For example, if the artificial intelligence understands the characteristics and state of the user that is riding the vehicle (user's facial expression and activity may be detected using various sensors, and the characteristics and state of the user may be presumed from the movement of vehicle), the artificial intelligence mounted in the self-driving car can receive the provided content without a user operation, and automatically determine whether to accept or reject the content in consideration of the characteristics and state of the user without confirming user's intention. An incentive received when accepting a content may be used by the artificial intelligence without the user's consent (e.g., if it is determined that the user is in a hurry today, the artificial intelligence uses the right of travelling on a priority lane), and when receiving goods, the artificial intelligence explains how the goods was given in order to please the user, and determines how pleased the user is and uses this information for determining whether or not to accept content the next time.

Moreover, in the above-described embodiments, users are classified into clusters, an activity change rate is recorded for each of the clusters, and a candidate for a target for providing a content is selected for each of the clusters, but it is also preferred to record an activity change rate and a candidate for a target for providing a content is selected for each user. For example, an activity change rate for each user can be calculated from a rate of the number of times the user actually changed their activity to the number of times the same content (or a similar content) has been provided to the user. At this time, the difference in user's state and the external environment between a case where the user accepted the content and a case where the user rejected the content may be taken into consideration. As a method for selecting a target for providing a content based on the activity change rate for each user, an appropriate method can be adopted in accordance with the purpose and an expected effect, for example, users with a higher activity change rate are preferentially selected, and selection is performed such that both users with a high activity change rate and users with a low activity change rate are present.

Moreover, in the above-described embodiments, a content is selected based on the characteristics and states of users and is provided, and content acceptance (activity change) results are totalled, but it is preferred to take not only the characteristics and states of users, but also the external environment (e.g., the weather condition, the calendar and events) into consideration.

For example, the present invention is also applicable to electricity demand control. In order to prevent power outage in an entire area when electrical power demand increases and electrical power shortage occurs, electrical power demand needs to be reduced. In view of this, the activity control system is used for providing a content for requesting electricity saving to households that can save electricity, in order to reduce the electrical power demand. Also at this time, appropriate activity control is possible by taking the characteristics and state of each household into consideration. Incidentally, electrical power can be purchased from any electrical power supply company due to electricity deregulation. There is a plurality of power generation methods, and the amount of electrical power that can be supplied by a power generation company varies in every occasion due to the weather, the state of a power generating device and the like. In view of this, if there is a power generation company in which a demand is greater or expected to be greater than a supply, the electrical power supply can be disconcentrated by providing content to a portion of the users so as to request for temporal switch to another power generation company that can afford to supply electricity. This makes it possible to keep a good balance between the electricity demand and the electricity supply in the whole area, and to prevent power outage. The system preferably selects targets for providing content based on the situation of each home, the content acceptance rate in the past and the like. In addition, it is possible to encourage electricity saving and activity change such as switch of power generation companies by giving away incentives if necessary.

### LIST OF REFERENCE NUMERALS

- 100: activity control system
- 110: server communication unit
- 120: user activity management unit
- 121: user information registration unit
- 122: user analysis unit
- 130: user information storage
- 131: user characteristics management DB
- 132: user state management DB
- 133: user activity pattern management DB
- 134: user sensor data management DB
- 135: content effect management DB
- 140: traffic management/demand control unit
- 141: traffic situation recognition and prediction/congestion determination unit
- 142: levelling model generation unit
- 143: content selection/provision unit
- 144: content effect determination unit
- 150: traffic situation storage
- 151: traffic situation history DB
- 152: traffic situation prediction DB
- 153: local transportation route DB
- 200: terminal apparatus
- 300: other apparatus

## Claims

1. An activity control system (100) for changing, in order to bring an overall situation of activities of a large number of users closer to an overall optimum state that is based on a predetermined criterion, activities of a selected portion of or all of the large number of users, the activity control system (100) including:
a database for updating and storing information indicating characteristics and/or a state of each user;
activity determination means for determining an activity to be taken by the selected users in order to bring the overall situation closer to the overall optimum state based on the information stored in the database;
content provision means for transmitting, to terminal apparatuses (200) of a portion of users selected from users whose information is stored in the database, content for prompting change to the activity determined by the activity determination means;
checking means for checking whether or not the users that received the provided content have actually changed activities in accordance with the content; and
content effect determination means for determining characteristics and/or states of users that are likely to accept the content, based on a checking result by the checking means and characteristics and/or states of the users stored in the database, and recording a determination result in the database,
wherein the content provision means determines users that are to be selected as a target to which the content is to be provided, based on the determination result recorded in the database, when the content is provided next time.

2. The activity control system (100) according to claim 1, wherein
the overall situation is a vehicle distribution situation in a road network, and the overall optimum state is a non-congestion state.

3. The activity control system (100) according to claim 1 or 2, wherein
the content effect determination means calculates, for each user, an activity change rate that is a ratio of the number of times an activity has been actually changed in accordance with the content to the number of times the content has been provided, and records, in the database, the activity change rate for each user as the determination result.

4. The activity control system (100) according to claim 3, wherein
when providing the content, the content provision means selects users whose activity change rate for the content is high, as a target for providing the content.

5. The activity control system (100) according to claim 1 or 2, wherein
the content effect determination means divides the plurality of users into a plurality of clusters based on their characteristics and/or states, calculates, for each of the clusters, an activity change rate that is a rate of the number of users that actually have changed their activities in accordance with the content to the total number of users to which the content has been provided, and records, in the database, the activity change rate for each cluster as the determination result.

6. The activity control system (100) according to claim 5, wherein
when providing the content, the content provision means selects users that belong to a cluster with a high activity change rate for the content, as a target for providing the content.

7. The activity control system (100) according to claim 6, wherein
if there is an upper limit to the number of users that can accept the content, the content provision means calculates the number of people predicted to accept the content in a case where the content is provided, by multiplying the number of users that belong to a cluster selected as a target for providing the content by an activity change rate of the cluster, and if the number of people predicted to accept the content exceeds the upper limit, reduces the number of users to which the content is to be provided.

8. The activity control system (100) according to any one of claims 1 to 7, wherein
the content provision means is configured to provide a plurality of contents having different content details, and the content effect determination means performs, for each of the plurality of contents, effect determination of what characteristics users that readily accept each content have and/or what state such users are in, and records, in the database, a result of the effect determination for each of the plurality of contents.

9. The activity control system (100) according to claim 8, wherein
the plurality of contents include content for giving away an incentive to users that have changed activities, and a content for not giving away an incentive to users that have changed activities, and the content provision means more preferentially provides the content for not giving away an incentive to users that have changed activities than the content for giving away an incentive to users that have changed activities.

10. An activity control method for changing, in order to bring an overall situation of activities of a large number of users closer to an overall optimum state that is based on a predetermined criterion, activities of a selected portion of or all of the large number of users, the activity control method comprising the following steps:
a computer updating and storing, in a database, information indicating characteristics and/or a state of each user;
the computer determining an activity to be taken by the selected users in order to bring the overall situation closer to the overall optimum state based on the information stored in the database;
the computer transmitting, to terminal apparatuses (200) of a portion of users selected from users whose information is stored in the database, content for prompting change to the determined activity;
the computer checking whether or not the users that received the provided content have actually changed activities in accordance with the content; and
the computer determining characteristics and/or states of users that are likely to accept the content, based on a checking result and characteristics and/or states of the users stored in the database, and recording a determination result in the database,
wherein users that are to be selected as a target to which the content is to be provided are determined, based on the determination result recorded in the database, when the content is provided next time.

11. A program for causing a computer to execute each step of the activity control method according to claim 10.
